# FASCICULE DE BREVET EUROPEEN

(11) **EP 0 657 105 B1**
(45) Date de publication et mention de la délivrance du brevet: **05.01.2000**
(21) Numéro de dépôt: 94116604.3
(22) Date de dépôt: 21.10.1994
(51) Int. Cl.: A23D 7/00, A23L 1/035, A23G 9/02

(54) **Enrobage d'un produit de confiserie glacé**
Beschichtungsmittel für gefrorene Süssenwaren
Coating agent for ice confections

(30) Priorité: 10.11.1993 US 149996
(43) Date de publication de la demande: 14.06.1995
(73) Titulaire: SOCIETE DES PRODUITS NESTLE S.A., 1800 Vevey (CH)
(72) Inventeur: De Pedro, Mayda Tunac, Canoga Park, CA 91306 (US); Estiandan, Fe Sipin, Northridge, CA 91325 (US); Talbot, Michael Lee, Lenexa Kansas 66215 (US); Traitler, Helmut, CH-1802 Corseaux (CH)
(74) Mandataire: Archambault, Jean

(56) Documents cités:
- EP-A- 0 195 476
- EP-A- 0 430 180
- BE-A- 510 509
- US-A- 3 582 358
- US-A- 3 809 764
- DATABASE WPI Week 8546, Derwent Publications Ltd., London, GB; AN 85-285484 & JP-A-60 193 928 (NIPPON OILS & FATS) 2 Octobre 1985
- SüSSWAREN, no.14, 1970 pages 695 - 699 K.STISTRUP ET AL. 'der einfluss von emulgatoren auf production, microstruktur und qualität'

## Description

La présente invention a pour objet un enrobage à base d'une émulsion eau-dans-huile et ses utilisations comme produit de remplacement interne et externe des matières grasses classiques dans des desserts glacés. Elle concerne en outre un procédé d'enrobage d'un produit de confiserie glacé, par exemple une glace.

Dans un produit de confiserie glacé enrobé, par exemple une sucette glacée, une barre glacée, un bloc glacé, un cône glacé, une coupe glacée ou un gâteau glacé, la plus grande part des calories dans un enrobage classique à base de matières grasses provient des matières grasses qui peuvent représenter une quantité de l'ordre de 45 à 60 % en poids de l'enrobage. Il serait souhaitable de réduire fortement la quantité de calories dans un produit de confiserie enrobé en produisant un enrobage à basse teneur en calories, ayant une teneur réduite en matières grasses.

Les difficultés dans la conception d'une composition d'enrobage à basse teneur en calories consiste en le fait que cette composition doit posséder des propriétés organoleptiques similaires à celles des enrobages classiques à base de matières grasses, en particulier une bonne nature croquante, une saveur de chocolat et une sensation gustative crémeuse onctueuse, une fonctionnalité convenable, en particulier une forte viscosité, et une bonne résistance au stockage et aux chocs thermiques pour pouvoir être traitée dans une opération d'enrobage.

Le document US-A-5 017 392 revendique un procédé d'enrobage d'un produit de confiserie glacé, dans lequel la composition d'enrobage est une composition à teneur réduite en calories en raison du fait qu'elle est dépourvue de sucre et qu'elle contient de l'aspartame, du mannitol et du polydextrose comme produit de remplacement du sucre, et qu'elle contient du beurre de cacao et une matière grasse végétale.

Le document JP-A-59 059 149 décrit une composition à teneur réduite en calories pour l'enrobage d'une crème glacée, cette composition étant à base d'une émulsion eau-dans-huile et renfermant un agent émulsionnant consistant en une association d'un ester d'acide ricinoléique condensé et de polyglycérol, servant d'émulsionnant principal, et d'un ester de glycérol et d'acide gras, d'un ester de sorbitanne et d'acide gras ou de lécithine, servant d'émulsionnant secondaire. Le document AP-A-0 430 180 décrit une émulsion eau-dans-huile avec un rapport de poids (phase aqueuse=phase grasse) de 50=50 à 80=20 et de 0.1 à 5% en poids d'un décrester du décaglycerol et de l'acide érucique.

Il a été trouvé qu'il était possible de produire un enrobage à teneur réduite en calories à base d'une émulsion eau-dans-huile, qui possède les mêmes propriétés de texture et de saveur que celles d'enrobages classiques à base de matières grasses, et qui possède une teneur en calories fortement réduite.

En conséquence, la présente invention propose une émulsion eau-dans-huile pour l'enrobage de desserts glacés, qui comprend 40 à 55 % en poids d'eau et 2 à 4 % en poids d'un émulsionnant comprenant un ester de décaglycérol et de déca-acide gras.

Dans le contexte de la présente invention, une composition d'enrobage n'est pas limitée à un enrobage de surface, mais comprend également l'utilisation de l'enrobage dans des applications dans lesquelles des couches alternées d'une crème glacée et d'un enrobage sont formées pour engendrer des produits stratifiés. Elle peut également être utilisée pour former des morceaux solides qui peuvent être utilisés, par exemple, à la place d'inclusions de chocolat.

Le dessert glacé peut être n'importe quel produit laitier ou non laitier, par exemple une crème glacée, un lait glacé, une crème glacée aux oeufs, un yaourt congelé ou une mousse glacée.

Avantageusement, l'émulsionnant comprend du déca-oléate de décaglycérol (DGDO) ayant un équilibre hydrophile-lipophile (HLB) de préférence égal à environ 3.

Le sucre et d'autres composés hydrosolubles (par exemple des agents humectants) ne doivent pas être présents à des teneurs excédant environ 3 % en poids de la composition totale d'enrobage afin d'éviter le ramollissement de la texture.

Dans des applications spécifiques, par exemple l'enrobage, des composés supplémentaires augmentant la viscosité peuvent être ajoutés pour épaissir la composition d'enrobage, lorsqu'une viscosité légèrement supérieure est souhaitable. Il est possible d'y parvenir en ajoutant un émulsionnant secondaire, de préférence un sel de sodium de mono- et diglycérides phosphatés, ou un épaississant, par exemple la cellulose microcristalline, de préférence enrobée dans de la carboxyméthylcellulose.

D'autres ingrédients, comprenant des édulcorants, des aromatisants ou des colorants, peuvent être présents, les proportions de ces ingrédients pouvant être déterminées en fonction du goût et/ou de l'aspect. L'édulcorant peut être, par exemple, l'aspartame ou le sucralose. Un extrait sec de cacao sans matières grasses pouvant être issu de la liqueur de cacao ou de la poudre de cacao peut être utilisé comme agent aromatisant, et il est possible également d'ajouter un autre arôme, par exemple un arôme de fruit ou la vanilline, en fonction des préférences. Lorsqu'un extrait sec de cacao est utilisé, il doit contenir seulement des particules fines car, dans le cas contraire, la composition d'enrobage posséderait une texture grossière. Du glycérol est de préférence ajouté pour réduire l'amertume de la liqueur ou poudre de cacao utilisée.

En ce qui concerne la phase de matières grasses, des matières grasses à haut point de fusion, telles que le beurre de cacao ou la graisse de coprah, peuvent être utilisées pour conférer la nature croquante requise à la composition d'enrobage.

La phase aqueuse peut contenir de préférence un conservateur, par exemple un sorbate, et être acidifiée à un pH d'environ 4 à 4,5 afin de garantir qu'elle n'assure par la croissance de micro-organismes engendrant la putréfaction.

La composition d'enrobage à teneur réduite en calories peut contenir en outre des inclusions croustillantes, par exemple des céréales, telles que le riz soufflé ou grillé, ou des morceaux de fruits séchés qui doivent être enrobés dans des agents de protection contre l'humidité pour retarder l'absorption de l'humidité à partir de l'enrobage, ce qui aurait pour résultat final leur ramollissement.

La présente invention concerne en outre un procédé de production d'une composition d'enrobage à teneur réduite en calories, qui comprend les étapes consistant à mélanger séparément de l'eau au conservateur, à l'arôme et aux agents édulcorants à un pH faiblement acide pour préparer la phase aqueuse, à mélanger séparément une phase de matières grasses à l'émulsionnant consistant en ester de décaglycérol et de déca-acides gras à une température à laquelle la matière grasse est liquide, et à introduire la phase aqueuse dans la phase de matière grasse tout en mélangeant énergiquement, la phase aqueuse représentant 40 à 55 % en poids et la formulation d'émulsionnant représentant 2 à 4 % en poids de la composition finale.

La composition d'enrobage à teneur réduite en calories est préparée d'une manière similaire à celle d'un mélange pour crème glacée, avec un appareillage identique. Le procédé peut comprendre une étape de pasteurisation, par exemple dans une installation à haute température et courte durée (HTST) consistant en un réservoir mélangeur à fort cisaillement, un échangeur à plaques pour le chauffage/refroidissement, des tubes de chambrage et, facultativement, un homogénéisateur. En variante, l'échangeur de chaleur peut comprendre une enveloppe et une unité tubulaire de chauffage/refroidissement, sans homogénéisateur.

Il est possible d'ajouter des composés augmentant la viscosité pour épaissir la composition d'enrobage, lorsqu'une viscosité légèrement plus forte est souhaitable. Il est possible d'y parvenir en ajoutant un émulsionnant secondaire, de préférence un sel de sodium de mono- et diglycérides phosphatés, ou un épaississant, par exemple la cellulose microcristalline, de préférence enrobée avec de la carboxyméthylcellulose.

La présente invention concerne en outre un procédé d'enrobage d'un morceau de confiserie glacée, qui comprend son refroidissement préalable à une température égale ou inférieuse à -30°C et l'immersion du morceau refroidi au préalable dans une composition d'enrobage à teneur réduite en calories sous forme d'une émulsion eau-dans-huile, composition qui comprend 40 à 55 % en poids d'eau et 2 à 4 % en poids d'une formulation d'émulsionnant comprenant un ester de décaglycérol et de déca-acides gras.

De préférence, l'immersion dans la composition d'enrobage à teneur réduite en calories est suivie par une immersion du morceau enrobé dans une composition aqueuse ou la pulvérisation d'une composition aqueuse sur ce morceau pour produire une couche extérieure de glace afin de le protéger contre la perte d'humidité au cours du stockage. La perte d'humidité au cours du stockage est néfaste pour la qualité du produit fini puisqu'elle peut induire une exsudation en surface. En remplacement de cette dernière étape d'immersion dans l'eau, il est possible d'utiliser une formulation qui supprime la perte d'humidité en surface, par exemple un emballage sous vide dans un conditionnement étanche à l'humidité.

La présente invention concerne en outre un procédé de moulage de morceaux de confiserie glacée, qui comprend l'enrobage d'un moule avec de la glace en formant un enrobage de glace sur la surface intérieure dudit moule, l'insertion dans le moule revêtu de glace en surface d'un enrobage liquide à teneur réduite en calories et la réaspiration de l'enrobage liquide en excès pour former une coquille, le remplissage de la coquille avec une crème glacée, l'addition d'une quantité supplémentaire d'enrobage liquide, l'insertion d'un bâtonnet et le démoulage en décongelant l'enrobage de glace.

Dans un forme de réalisation avantageuse du procédé de moulage, le morceau enrobé est en outre plongé dans un milieu aqueux pour éviter une perte d'humidité en surface et l'exsudation consécutive.

Des morceaux de crème glacée peuvent également être enrobés en utilisant un enrobeur.

La présente invention concerne également l'utilisation de la composition d'enrobage à teneur réduite en calories pour former un film ou une couche ou bien une inclusion dans un dessert glacé.

Dans une première application de l'enrobage à teneur réduite en calories, la composition d'enrobage tombe sur une courroie ou une bande ou bien dans un moule, puis est refroidie pour former des morceaux solides, par exemple des gouttes de composition d'enrobage à teneur réduite en calories qui peuvent être utilisées comme inclusions dans une crème glacée.

Dans une deuxième application, la composition d'enrobage à teneur réduite en calories peut être pulvérisée pour former un film ou une couche sur la surface d'une crème glacée ou bien des films ou des couches à l'intérieur d'une crème glacée pour former un produit multicouches.

Dans une application supplémentaire de la composition d'enrobage à teneur réduite en calories, la composition liquide d'enrobage peut être coextrudée avec une crème glacée à partir d'une filière pour former un centre ou une couche marbrée.

Les exemples suivants illustrent plus en détail la présente invention, les pourcentages et les parties mentionnés dans ces exemples étant exprimés en poids, sauf spécification contraire.

### Exemples 1-2

Un lot de 140 kg de composition d'enrobage à teneur réduite en calories a été préparé dans une installation classique de mélange de crèmes glacées HTST consistant en un réservoir mélangeur à fort cisaillement, un échangeur de chaleur à plaques (section de chauffage), un tube de chambrage et un échangeur de chaleur à plaques (section de refroidissement). Après pasteurisation, la composition d'enrobage a été recueillie et stockée jusqu'à son utilisation dans un récipient de stockage sous agitation d'une capacité de 50 kg, muni d'une chemise de maintien de température à 40-50°C.

Une phase aqueuse a été préparée en mélangeant de l'eau et du sorbate de potassium dans le réservoir d'alimentation HTST et une solution aqueuse à 85 % d'acide phosphorique a été ajoutée pour atteindre un pH de 4,2. Du caramel colorant et du glycérol ont été ensuite ajoutés et la préparation totale a été mélangée à 50-52°C. Puis de la vanilline et de l'aspartame ont été ajoutés peu de temps avant l'addition de la phase aqueuse à la phase de matière grasse.

Une phase de matière grasse a été préparée séparément en mélangeant de la liqueur de cacao et de l'huile de coprah ainsi que, chaque fois que cela a été requis, de la cellulose microcristalline (Exemple 2) dans un réservoir mélangeur à 52-54°C, et un émulsionnant a été ajouté.

La phase aqueuse a été ajoutée progressivement à la phase de matière grasse sous agitation, en formant ainsi une émulsion eau-dans-huile, et l'émulsion a été amenée par pompage à la section de chauffage d'un échangeur de chaleur à plaques chauffé à 81°C avec de l'eau chaude, laissée au repos pendant 0,5 minute dans un tube de chambrage, puis refroidie à 48°C dans la section de refroidissement d'un échangeur de chaleur à plaques, le temps total de séjour dans le dispositif HTST étant égal à environ 6 minutes pour l'Exemple 1 et à environ 4 minutes dans l'Exemple 2. Les ingrédients de la composition sont indiqués sur le Tableau I ci-dessous.

**Tableau I**

| | Exemples | |
|---|---|---|
| Ingrédients, % | 1 | 2 |
| Eau | 45,5 | 45 |
| Huile de coprah | 29,9 | 29,4 |
| Liqueur de cacao | 19,6 | 19,6 |
| Décaoléate de décaglycérol | 3,1 | 3,1 |
| Glycérol | 1 | 1 |
| Cellulose | - | 1 |
| Sorbate de potassium | 0,12 | 0,12 |
| Acide phosphorique (85 %) | 0,04 | 0,04 |
| Caramel colorant | 0,62 | 0,62 |
| Aspartame | 0,08 | 0,08 |
| Vanilline | 0,04 | 0,04 |
| Viscosité Brookfield | 620 | 780 |
| (cps/40°C/100 tr/min) | | |

La composition d'enrobage de l'Exemple 2 (émulsion eau-dans-huile) a été comparée à deux enrobages classiques ayant respectivement des teneurs en matière grasse de 45 % et 60 %, en ce qui concerne leur teneur en calories. Les résultats sont résumés sur le Tableau II ci-dessous.

**Tableau II**

| Constituant | Kcal/g | Enrobage classique, 45 % de matières grasses | Enrobage classique, 60 % de matières grasses | Emulsion eau-dans-huile |
|---|---|---|---|---|
| Saccharose | 4 | 40 | 29 | - |
| Extrait sec de lait | 4 | 9 | 7 | - |
| Extraits secs de cacao sans matières grasses | 1,5 | 6 | 4 | 9 |
| Glycérol | 3 | - | - | 1 |
| Cellulose | - | - | - | 1 |
| Matières grasses et émulsionnants | 9 | 45 | 60 | 44 |
| Eau | - | - | - | 45 |
| Teneur totale en calories, kcal/g | | 6,1 | 6,9 | 4,1 |

### Exemple 3

Un mode opératoire similaire à celui décrit dans l'Exemple 1 a été suivi, sauf qu'une pasteurisation a été effectuée dans un dispositif particulier à faible cisaillement, en utilisant des échangeurs de chaleur à enveloppes et tubes comprenant une section de chauffage, une section de chambrage et une section de refroidissement, le temps de séjour dans le tube de chambrage étant égal à 0,5 min et les conditions de température pour le chauffage/refroidissement étant égales à 72°C/40°C. La composition d'enrobage possédait une viscosité Brookfield de 320 cps (40°C/100 tr/min).

### Exemple 4

Un mode opératoire similaire à celui décrit dans l'Exemple 2 a été suivi, sauf que la liqueur de cacao a été remplacée par du beurre de cacao et l'émulsionnant a été remplacé par un mélange de 2,6 % de décaoléate de décaglycérol et 0,5 % d'un monodiglycéride phosphaté dans les ingrédients de la composition d'enrobage, l'enrobage étant de couleur blanche.

La composition d'enrobage de couleur blanche peut être teintée pour obtenir des couleurs différentes.

### Exemple 5

Les compositions d'enrobage à teneur réduite en calories des Exemples 1 à 4 ont été congelées et stockées à - 18°C pour une utilisation ultérieure. Pour leur réutilisation, elles ont été décongelées et remélangées énergiquement à 40°C, et elles se sont révélées présenter une qualité excellente.

### Exemple 6

Une crème glacée a été extrudée et coupée en barres en utilisant un mélangeur pour crèmes glacées, avec 58,5 % d'eau, 31,9 % de matières solides non grasses, 9,6 % de matières grasses et 20 à 30 % d'agent de foisonnement. Les barres ont été ensuite passées à travers un tunnel à azote liquide (congélation éclair) et ont été refroidies à -80°C pendant 3 minutes. Finalement, les barres ont été enrobées avec la composition d'enrobage à teneur réduite en calories de l'Exemple 2, à une température de 38°C. Les barres obtenues étaient recouvertes de manière adéquate d'une couche uniforme d'enrobage qui adhérait convenablement à la surface de la barre. Après enrobage, les barres ont été soumises à une pulvérisation d'eau à 5-15°C et à un ensachage en continu. Lors du stockage à -22°C, il ne s'est produit aucune perte d'humidité et aucune exsudation de matières grasses n'a pu être observée. Ce procédé convenait également à la préparation de bouchées.

### Exemple 7

Les cellules d'une machine à bâtonnet dans un réservoir de saumure à -38°C ont été revêtues intérieurement avec un film mince de glace par pulvérisation d'un brouillard d'eau dans ces cellules. Puis les moules ont été remplis avec la composition d'enrobage à teneur réduite en calories de l'Exemple 1, à une température de 40°C. Au bout de 10 s, la composition d'enrobage en excès a été réaspirée et une crème glacée foisonnée à 80 % a été déposée à -2,5°C dans les coquilles de glace ainsi formées. Après insertion de bâtonnets et addition d'un enrobage à teneur plus réduite en calories à une température de 40°C, les bâtonnets de glace ont été démoulés en décongelant l'enrobage de glace à 12°C et ont été finalement immergés dans de l'eau à 15°C et ensachés en continu.

### Exemple 8

L'enrobage de l'Exemple 1 a été pulvérisé sous forme de couches alternées en films minces dans un cône de crème glacée pour former un article stratifié. Ce procédé convenait également à la préparation de coupes de glaces aux fruits enrobées et de crèmes glacées en vrac.

### Exemple 9

L'enrobage de l'Exemple 1 a été moulé en gouttes en déposant de petites perles sur une bande d'acier refroidie à -20°C pour obtenir de petits morceaux en forme de larmes qui ont été en outre refroidis dans un tunnel et stockés à - 20°C. Ces morceaux peuvent être utilisés comme inclusions dans une crème glacée.

### Exemple 10

Le procédé de l'Exemple 9 a été mis en oeuvre, mais l'enrobage a été déposé dans de petits moules. Après refroidissement, les petits morceaux ont été démoulés.

## Revendications

1. Emulsion eau-dans-huile pour l'enrobage de desserts glacés, qui comprend 40 à 55 % en poids d'eau et 2 à 4 % en poids d'une formulation d'émulsionnant comprenant un ester de décaglycérol et de déca-acides gras.

2. Emulsion suivant la revendication 1, qui comprend des composés ajoutés augmentant la viscosité, choisis entre un sel de sodium de mono- et diglycérides phosphatés servant d'émulsionnant secondaire et la cellulose microcristalline servant d'épaississant.

3. Emulsion suivant la revendication 1, dans laquelle la phase aqueuse contient un ou plusieurs édulcorants, aromatisants, colorants ou conservateurs et est acidifiée à un pH faiblement acide avec un acide à usage alimentaire.

4. Procédé de production d'une composition d'enrobage à teneur réduite en calories, qui comprend les étapes consistant à mélanger séparément de l'eau à un conservateur, un arôme et des agents édulcorants à un pH faiblement acide pour produire la phase aqueuse, à mélanger séparément une phase de matière grasse à l'émulsionnant consistant en un ester de décaglycérol et de déca-acide gras à une température à laquelle la matière grasse est liquide, et à introduire la phase aqueuse dans la phase de matière grasse tout en mélangeant énergiquement, la phase aqueuse représentant 40 à 55 % en poids et la formulation d'émulsionnant représentant 2 à 4 % en poids de la composition finale.

5. Procédé suivant la revendication 4, qui comprend la pasteurisation de la composition dans une installation de mélange pour pasteurisation à température élevée consistant en un réservoir mélangeur à fort cisaillement, un échangeur de chauffage/refroidissement et des tubes de chambrage à 70-85°C pendant un temps de 4 à 8 min, le refroidissement de cette composition à 38-45°C et ensuite le stockage de cette composition à cette température en agitant doucement en attente de l'utilisation.

6. Procédé suivant la revendication 4, qui comprend la congélation de la composition et le stockage de cette composition à une température inférieure à -18°C jusqu'à ce qu'elle soit décongelée et remélangée énergiquement pour son utilisation.

7. Procédé d'enrobage d'un morceau de confiserie glacée, qui comprend son refroidissement préalable à une température égale ou inférieure à -30°C et l'immersion du morceau refroidi au préalable dans une composition d'enrobage à teneur réduite en calories sous forme d'une émulsion eau-dans-huile, composition qui comprend 40 à 55 % en poids d'eau et 2 à 4 % en poids d'une formulation d'émulsionnant comprenant un ester de décaglycérol et de déca-acides gras.

8. Procédé de moulage de morceaux de confiserie glacée, qui comprend l'enrobage d'un moule avec de la glace en formant un enrobage de glace sur la surface intérieure dudit moule, l'insertion dans le moule revêtu de glace en surface d'un enrobage liquide à teneur réduite en calories suivant l'une quelconque des revendications 1 à 3 et la réaspiration de l'enrobage liquide en excès pour former une coquille, le remplissage de la coquille avec une crème glacée, l'addition d'une quantité supplémentaire d'enrobage liquide, l'insertion d'un bâtonnet et un démoulage en décongelant l'enrobage de glace.

9. Utilisation de la composition d'enrobage à teneur réduite en calories suivant l'une quelconque des revendications 1 à 3 pour former un film ou une couche ou bien une inclusion dans un dessert glacé.

10. Procédé de co-extrusion de la composition à teneur réduite en calories suivant l'une quelconque des revendications 1 à 3 avec une crème glacée à partir d'une filière pour former un centre ou une couche marbrée.

## Claims

1. Water-in-oil emulsion for coating ice desserts, which includes 40 to 55 % by weight of water and 2 to 4 % by weight of an emulsifying formulation comprising an ester of decaglycerol and fatty deca-acids.

2. Emulsion according to claim 1 which includes compounds added to increase the viscosity, chosen between a sodium salt of phosphated mono- and diglycerides acting as a secondary emulsifier and microcrystalline cellulose acting as a thickening agent.

3. Emulsion according to claim 1, wherein the aqueous phase contains one or more sweeteners, flavouring agents, colorants or preservatives and is acidified to a weakly acidic pH with a food acid.

4. Process for producing a coating composition with a low calorie content, which comprises steps consisting of separately mixing water with a preservative, a flavouring agent and sweetening agents at a weakly acidic pH to produce the aqueous phase, of separately mixing a fatty phase with the emulsifier consisting of an ester of decaglycerol and fatty deca-acid at a temperature at which the fats are liquid, and of introducing the aqueous phase into the fats with vigorous mixing, the aqueous phase representing 40 to 55 % by weight and the emulsifying formulation representing 2 to 4 % by weight of the final composition.

5. Process according to claim 4, which includes the pasteurization of the composition in a mixing installation for high-temperature pasteurization consisting of a high-shear mixing reservoir, a heating/cooling exchanger and tubes for holding the composition at 70-85°C for 4 to 8 min, cooling this composition to 38-45°C and then storing it at this temperature with gently stirring until used.

6. Process according to claim 4, which comprises freezing the composition and storing this composition at a temperature below -18°C until it is unfrozen and remixed vigorously for use.

7. Process for coating a portion of ice confectionery, which comprises first of all cooling it to a temperature equal to or below -30°C and of immersing the previously cooled portion in a coating composition with a low calorie content in the form of a water-in-oil emulsion, a composition which includes 40 to 55 % by weight of water and 2 to 4 % by weight of an emulsifying formulation comprising an ester of decaglycerol and fatty deca-acids.

8. Process for moulding portions of ice confectionery, which comprises coating a mould with ice by forming a coating of ice on the inner surface of the said mould, inserting in the mould coated with ice on its surface a liquid coating with a low calorie content according to any one of claims 1 to 3, and of sucking out the excess liquid coating to form a shell, filling the shell with ice cream, adding a supplementary quantity of liquid coating, inserting a stick and demoulding by unfreezing the ice coating.

9. Use of the coating composition with a low calory content according to any one of claims 1 to 3 for forming a film or layer or even an inclusion in an ice dessert.

10. Process for co-extruding the composition with a low calorie content according to any one of claims 1 to 3 with an ice cream from a die for forming a centre or a veined layer.

## Patentansprüche

1. Wasser-in-Öl-Emulsion zum Uberziehen von gefrorenen Süßwaren, die 40 bis 55 Gew.-% Wasser und 2 bis 4 Gew.-% einer Emulgator-Formulierung enthält, die einen Ester aus Decaglycerol und Decafettsäuren enthält.

2. Emulsion nach Anspruch 1, die zusätzliche Verbindungen zur Erhöhung der Viskosität enthält, die ausgewählt sind aus einem Natriumsalz von Mono- und Diglyceridphosphaten, das als sekundärer Emulgator dient, sowie mikrokristalliner Cellulose, die als Verdickungsmittel dient.

3. Emulsion nach Anspruch 1, bei der die wäßrige Phase eines oder mehrere von Süßungsmitteln, Aromatisierungsmitteln, Färbemitteln und Konservierungsmitteln enthält und mit einer Säure für Nahrungsmittelzwecke auf einen schwach sauren pH angesäuert ist.

4. Verfahren zur Herstellung einer Uberzugs-Zusammensetzung mit einem verminderten Kaloriengehalt, das die Schritte umfaßt, die bestehen in einem getrennten Mischen von Wasser und einem Konservierungsmittel, einem Aroma und Süßungsmitteln bei einem schwach sauren pH, um die wäßrige PHase herzustellen, einem getrennten Mischen einer Fettphase mit einem Emulgator, der aus einem Ester von Decaglycerol mit einer Decafettsäure besteht, bei einer Temperatur, bei der das Fett flüssig ist, und dem Einführen der wäßrigen Phase in die Fettphase, wobei man energisch mischt, wobei die wäßrige Phase von 40 bis 55 Gew.-% und die Emulgator-Formulierung von 2 bis 4 Gew.-% der fertigen Zusammensetzung bilden.

5. Verfahren nach Anspruch 4, das das Pasteurisieren der Zusammensetzung in einer Mischervorrichtung zum Pasteurisieren bei einer erhöhten Temperatur, die aus einem Mischbehälter mit hoher Scherbeanspruchung, einem Wärme/Kälteaustauscher und Rohren zum Temperaturausgleich besteht, bei einer Temperatur von 70-85°C für einen Zeitraum von 4 bis 8 min, das Abkühlen der Zusammensetzung auf 38-45°C und danach die Lagerung dieser Zusammensetzung bei dieser Temperatur unter schwachem Rühren bis zu ihrer Verwendung umfaßt.

6. Verfahren nach Anspruch 4, das das Einfrieren der Zusammensetzung und die Lagerung der Zusammensetzung bei einer Temperatur unterhalb von -18°C, bis sie wieder aufgetaut wird und für ihre Verwendung energisch gemischt wird, umfaßt.

7. Verfahren zum Überziehen eines stückigen Eiskonfekts, das sein vorheriges Kühlen auf eine Temperatur von gleich oder weniger als -30°C und das Eintauchen des vorgekühlten Eiskonfektstücks in eine Überzugszusammensetzung mit einem verminderten Kaloriengehalt in Form einer Wasser-in-Öl-Emulsion umfaßt, wobei diese Zusammensetzung 40 bis 55 Gew.-% Wasser und 2 bis 4 Gew.-% einer Emulgator-Formulierung enthält, die einen Ester aus Decaglycerol und Decafettsäuren enthält.

8. Verfahren zum Formgießen eines stückigen Eiskonfekts, das das Überziehen einer Form mit Eis unter Ausbildung eines Eisüberzugs auf der Innenoberfläche der Form, das Einführen eines flüssigen Überzugs mit einem verminderten Kaloriengehalt nach einem der Ansprüche 1 bis 3 in die mit einer Eisoberfläche versehene Form, und das Absaugen des Überschusses des flüssigen Überzugs, um eine Schale zu bilden, das Füllen der Schale mit einer Eiscreme, das Zugeben einer zusätzlichen Menge an flüssigem Überzug, das Einstecken eines Stiels und die Entformung unter Auftauen des Eisüberzugs umfaßt.

9. Verwendung der Überzugszusammensetzung mit einem verminderten Kaloriengehalt nach einem der Ansprüche 1 bis 3 zur Bildung eines Films oder einer Schale oder auch eines Einschlusses bei einem Eiskonfekt.

10. Verfahren zum Coextrudieren der Zusammensetzung mit vermindertem Kaloriengehalt nach einem der Ansprüche 1 bis 3 mit einer Eiscreme aus einer Formdüse, um ein marmoriertes Zentrum oder eine marmorierte Hülle zu bilden.
